# EUROPEAN PATENT APPLICATION

(11) **EP 2 549 205 A2**
(43) Date of publication of application: **23.01.2013**
(21) Application number: 12173027.9
(22) Date of filing: 21.06.2012
(51) Int. Cl.: F25B 15/00

(54) **Triple-effect vapor absorption refrigeration system**

(30) Priority: 24.06.2011 IN MU18282011
(71) Applicant: Thermax Limited, Pune 411 019 (IN)
(72) Inventor: Radhakrishnan, Balu, 411048 Pune, MAHARASHTRA (IN); Panneersel, Babu, 411007 Pune, MAHARASHTRA (IN); Kulkarni, Swapna, 411045 Pune, MAHARASHTRA (IN)
(74) Representative: Pulieri, Gianluca Antonio

(57) **Abstract**

A triple-effect vapor absorption refrigeration system (100) is disclosed. The system (100) comprises a high temperature generator (102), a medium temperature generator (104), and a low temperature generator (106), for concentrating a dilute Li-Br solution from an absorber (110), through a flow path from the high temperature generator (102) to the low temperature generator (106) via the medium temperature generator (104). In the system (100) maximum Li-Br solution temperature and maximum Li-Br solution concentration does not occur simultaneously, hence, Li-Br corrosion rate is reduced and minimum non-condensable gases are generated, this helps in maintaining vacuum during operation thus providing a smoother operation.

## Description

### FIELD OF INVENTION

The present invention relates to absorption refrigeration systems. Particularly, the present invention relates to a triple-effect vapor absorption refrigeration system.

### DEFINITIONS OF TERMS USED IN THE SPECIFICATION

The term "low temperature generator" used in the specification means a generator operated over a temperature range of 70 - 100 °C being adapted to generate vapors.

The term "medium temperature generator" used in the specification means a generator operated over a temperature range of 100 - 150 °C being adapted to generate vapors.

The term "high temperature generator" used in the specification means a generator operated over a temperature range of 150 - 200 °C being adapted to generate vapors.

The term "low temperature heat exchanger" used in the specification means the heat exchanger operated over a temperature range of 35 - 100 °C being adapted to transfer heat between two liquids.

The term "medium temperature heat exchanger" used in the specification means the heat exchanger operated over a temperature range of 75 - 150 °C being adapted to transfer heat between two liquids.

The term "high temperature heat exchanger" used in the specification means the heat exchanger operated over a temperature range of 125 - 200 °C being adapted to transfer heat between two liquids.

The term "low temperature drain heat exchanger" used in the specification means the heat exchanger operated over a temperature range of 35 - 100 °C being adapted to transfer heat between two liquids.

The term "high temperature drain heat exchanger" used in the specification means the heat exchanger operated over a temperature range of 75 - 150 °C being adapted to transfer heat between two liquids.

### BACKGROUND OF INVENTION

The last century has been an era of rapid industrial growth and economic development. This growth was accompanied by an ever increasing demand for energy, derived essentially by burning fossil fuels. In order to preserve these fossil resources for the future and to reduce environmental destruction, energy conservation has become the need of the hour. Further, energy conservation helps in reducing operational cost thereby increasing the process efficiency. A substantial amount of energy is consumed in generating refrigeration effect. If this operation is made more efficient, then a substantial amount of energy can be conserved.

Refrigeration can be achieved either by vapor compression or by vapor absorption. The vapor compression cycle uses high grade energy from mechanical inputs while the vapor absorption cycle uses energy input from waste heat or heat derived from solar collectors. Thus, vapor absorption systems are preferred over vapor compression as they substantially reduce the operating costs by using low-grade waste heat. Also, the vapor absorption systems use non-ozone depleting refrigerants (water) and require much lesser electricity compared to the vapor compression systems. As a result, the vapor absorption systems are gaining favor over conventional vapor compression systems in industrial applications.

The basic vapor absorption cycle employs two fluids, the refrigerant and the absorbent. Most commonly, lithium bromide (Li-Br) - water are used as the absorbent-refrigerant pair. In the absorption cycle, the low-pressure refrigerant vapor is absorbed into the absorbent releasing a large amount of heat of dilution. The refrigerant-absorbent solution is pumped to a high-operating pressure generator, where heat is provided from a source selected from gas burner, steam, hot water and hot gases. The heat causes the refrigerant to desorb from the absorbent and vaporize. These vapors flow to a condenser, where the heat is rejected and the refrigerant is condensed to a high-pressure liquid. This liquid refrigerant is then sent to a low-pressure evaporator, where it evaporates by absorbing heat and thereby providing the cooling effect. The concentrated absorbent in the generator is then sent to the absorber, where it is absorbs the low-pressure refrigerant vapors from the evaporator, thus, completing the refrigeration cycle.

Conventionally the absorption refrigeration systems are either single-effect or double-effect. The process above discloses the working of a single-effect vapor absorption system. In a single-effect absorption system, heat released during the process of desorbing refrigerant vapors from absorbent stream, is rejected to the environment. In a multi-effect absorption system, some of this energy is utilized as the driving force to generate more refrigerant vapors. The more vapor generated per unit of heat input, greater the cooling capacity and higher the overall operating efficiency. A double-effect absorption system uses two generators including a high temperature and a low temperature generator, paired with a single condenser, absorber, and evaporator. The vapors released in the first generator are used as driving force for the second generator. Thus, the double-effect systems have a higher coefficient of performance (COP) than single-effect systems, i.e. if a single effect system has a COP in the range of 0.6 to 0.7 then a double-effect system has a COP in the range of 1.3 to 1.4.

As a double-effect refrigeration system is almost 100 % more efficient than a single-effect refrigeration system, it is obvious that a triple-effect refrigeration system will be even more efficient. However, the triple-effect refrigeration systems have still not been commercially exploited due to the following problems:

- the single-effect refrigeration systems operate at generator temperatures of about 95°C and the double-effect refrigeration systems operate at generator temperatures of about 155°C, therefore, theoretically, the triple-effect refrigeration systems have to operate at a generator temperature of above 200°C; at such high solution temperatures Lithium-Bromide solution is highly corrosive and controlling the corrosion rate at such high temperatures is very difficult;

- the high temperature of operation raises the chances of Li-Br crystallization;

- further, since triple-effect refrigeration systems are much more complicated than double-effect refrigeration systems and also because they operate at a much higher pressure, operating such a system is complex; and

- the high costs involved in setting a triple-effect refrigeration system may not be justified if a COP of at least 1.7 is not achieved.

In the past several attempts have been made to provide a triple-effect vapor absorption system, mostly involving studying the different feasible working cycles; wherein the working cycle involves: flow path of Lithium-Bromide, and its various diversifications and amalgamations.

A typical triple-effect vapor absorption system is described here below to better emphasize on the advantages of the present invention.

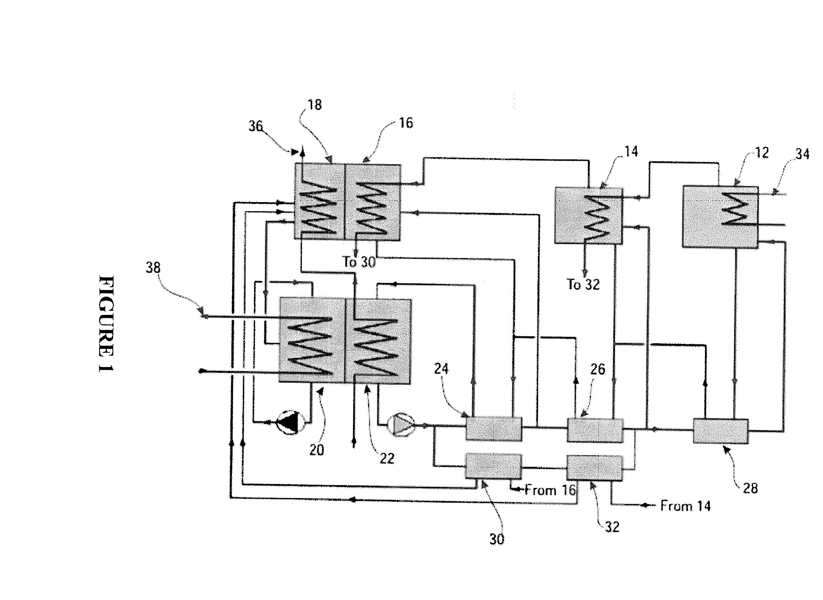

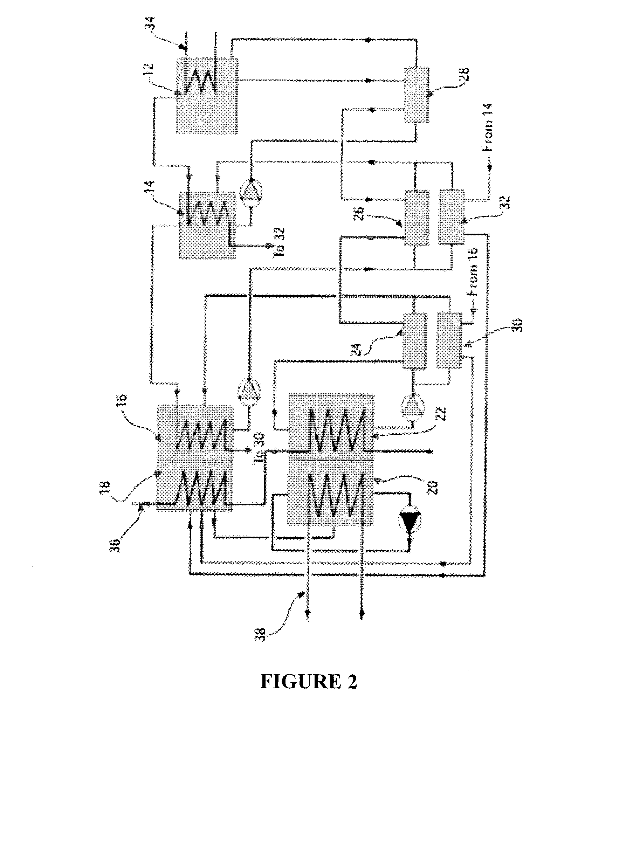

The typical triple-effect vapor absorption system, illustrated in FIGURES 1 & 2, comprises: a high temperature generator 12, a medium temperature generator 14, a low temperature generator 16, a condenser 18, an evaporator 20, an absorber 22, a low temperature heat exchanger 24, a medium temperature heat exchanger 26, a high temperature heat exchanger 28, a low temperature drain heat exchanger 30 and a high temperature drain heat exchanger 32.

Referring to FIGURE 1, in which is illustrated an embodiment of a conventional triple-effect vapor absorption system, a dilute Li-Br solution from the absorber 22 is fed in parallel streams to all the generators - viz., 12, 14, and 16. In the generators (12, 14 & 16) the dilute Li-Br solution gets concentrated; the resultant stream is combined to obtain a concentrated Li-Br solution having a maximum concentration of 63.5 %. The concentrated Li-Br solution is then sprayed in the absorber 22, where the solution absorbs refrigerant vapors coming from the evaporator 20 and becomes diluted, thereby, completing the cycle. The heat exchangers 24, 26, 28, 30 & 32 are provided to heat the dilute Li-Br solution leaving the absorber 22 by extracting heat from the concentrated Li-Br solutions leaving the generator 12, 14 & 16, and the refrigerant condensate leaving the generators 14 & 16, respectively. The refrigerant condensate after cooling in the drain heat exchangers 30 & 32 is further condensed in the condenser 18 by means of cooling water supplied through line 36, the high pressure condensate from the condenser 18 is subsequently sprayed in the evaporator 20, where the condensate takes heat from cold water supplied through line 38 to form vapors and thereby producing the refrigeration effect. Some disadvantages of this cycle are:

- the temperature of the Li-Br solution in the high temperature generator 12 is higher than 200 °C, therefore, maximum Li-Br solution temperature and maximum Li-Br concentration occurs simultaneously in the high temperature generator 12; at this point, Li-Br corrosion rate increases exponentially due to the high temperature and the high concentration, also resulting in the generation of non-condensable gases;

- since, three parallel flow streams are involved, the flow control is critical and the system is difficult to operate;

- since, all generators are operating at high Li-Br concentration, the chances of Li-Br crystallization are high; and

- further, since, the Li-Br solution temperature is higher than 200°C, the operating pressure is also higher.

Referring to FIGURE 2, in which is illustrated another embodiment of a conventional triple-effect vapor absorption system, the dilute Li-Br solution leaving absorber 22 is first fed to low temperature generator 16 where it is concentrated to an intermediate concentration. This solution is then fed to the medium temperature generator 14 for further concentration. Finally, the concentrated Li-Br solution from the medium temperature generator 14 is fed to the high temperature generator 12 where it reaches the maximum concentration. As the Li-Br solution concentration in the low temperature generator 16 is less (only intermediate concentration), the temperature of the generator 16 is less as compared to that in the cycle disclosed in FIGURE 1. Although, this cycle provides operation at a lower temperature and pressure than that disclosed in FIGURE 1, there are some disadvantages to this cycle as listed below:

- maximum Li-Br solution temperature and maximum Li-Br concentration occurs simultaneously in the high temperature generator 12; at this point, Li-Br corrosion rate increases exponentially due to the high temperature and the high concentration, also resulting in the generation of non-condensable gases;

- since the Li-Br solution is circulated from the low temperature generator 16 to the high temperature generator 12, in three separate stages, three solution pumps are required resulting in additional costs and power consumption; and

- also, the COP of this cycle is lower.

Some of the other triple-effect refrigeration systems are discussed in the prior art below:

US5205137 discloses an absorption air conditioner having an evaporator, an absorber for discharging a dilute solution, a regenerator, a condenser, and a first conduit, and comprising a regenerating chamber for heating and condensing a portion of the dilute solution generated in the absorber and an absorption chamber for causing the refrigerant vapors generated in the regenerating chamber to be absorbed into the dilute solution at an intermediate position prior to the absorber so that the size of the absorber is reduced. The system as disclosed in US5205137 comprises a high temperature regenerator and a low temperature regenerator arranged parallel to each other, wherein the dilute solution is simultaneously supplied to both the regenerators. This system is complex to operate and there is a high possibility of corrosion due to high temperature and high Li-Br concentration.

US5653116 discloses a triple-effect cycle comprises two hermetic loops - one a conventional LiBr double-effect loop, and other a single-effect loop which overlaps the high pressure portion of the double-effect loop, and exchanges heat with it at three locations. The system as disclosed in US5653116 uses Li-Br as an absorbent in the double-effect loop and NaOH and KOH as an absorbent in the high temperature loop. This system is complex and difficult to operate due to the multiple flow streams involved.

US2005262720 discloses a multi-stage regeneration system for regenerating a liquid desiccant comprising the liquid desiccant, a vapor/gas stream, and a high temperature regenerator and a low temperature regenerator comprising a rotating contacting device assembly that provides contact between the liquid desiccant and the vapor/gas stream for heat and/or mass transfer so as to effect carryover of the liquid desiccant into the vapor/gas stream. The system as disclosed in US2005262720 operates under high pressure conditions and provides a COP of only up to 0.9.

W09112472 discloses a refrigeration and/or heating system including a plurality of generators and a plurality of heat exchanging recuperators in which improved efficiencies are obtained by placing helical concentric coils of at least two generators and recuperators on a common axis with a heating unit at the center and allowing hot combustion gases to circulate in serpentine fashion through separate concentric chambers containing the coils. This system is complex and operates at a high pressure.

JP04562323 discloses an absorption machine for air conditioning which comprises a controller that operates shut-off valves to open and close when temperature of cooling water increases beyond 25 °C. This system is complex and involves high operating costs.

Therefore, there is felt a need to provide a triple-effect vapor absorption refrigeration system which will overcome the above mentioned drawbacks and provide a higher COP while conserving energy and thereby reducing the operating costs and the CO2 emissions.

### OBJECTS OF THE INVENTION

Some of the objects of the present invention, which at least one embodiment herein satisfies, are as follows:

An object of the present invention is to provide a triple-effect vapor absorption refrigeration system which substantially reduces corrosion due to high Li-Br concentration and high temperature during the operation.

Another object of the present invention is to provide a triple-effect vapor absorption refrigeration system having an increased co-efficient of performance (COP).

Still another object of the present invention is to provide a triple-effect absorption refrigeration system which is energy-efficient.

Yet another object of the present invention is to provide a triple-effect absorption refrigeration system which has an in-built mechanism to detect and prevent Li-Br crystallization.

One more object of the present invention is to provide a triple-effect absorption refrigeration system which is simple and easy to operate.

Yet one more object of the present invention is to provide a triple-effect absorption refrigeration system which minimizes heat losses.

An additional object of the present invention is to provide a triple-effect absorption refrigeration system which does not operate at super-atmospheric pressures.

Other objects and advantages of the present invention will be more apparent from the following description when read in conjunction with the accompanying drawings, which are not intended to limit the scope of the present invention.

### SUMMARY OF THE INVENTION

In accordance with the present invention, is disclosed a triple-effect vapor absorption refrigeration system comprising: a high temperature generator, a medium temperature generator, a low temperature generator, a condenser, an absorber, and an evaporator;
**characterized in that**:

- said high temperature generator is in operative communication with said absorber to receive a dilute Li-Br solution, said high temperature generator being adapted to concentrate the dilute Li-Br solution by means of a heat source having temperature in the range of 200 - 250 °C to provide a concentrated Li-Br solution and generate water vapors having temperature in the range of 130 - 150 °C;

- said medium temperature generator is in operative communication with said high temperature generator to receive the concentrated Li-Br solution and the water vapors having temperature in the range of 130 - 150 °C, said medium temperature generator being adapted to further concentrate the concentrated Li-Br solution by means of the water vapors to provide a further concentrated Li-Br solution and generate water vapors having temperature in the range of 80 - 100 °C and a first condensate;

- said low temperature generator is in operative communication with said medium temperature generator to receive the further concentrated Li-Br solution and the water vapors having temperature in the range of 80 - 100 °C, said low temperature generator being adapted to still further concentrate the further concentrated Li-Br solution by means of the water vapors to provide a still further concentrated Li-Br solution and generate water vapors and a second condensate;

- said condenser is in operative communication with said medium temperature generator to receive the first condensate and said low temperature generator to receive the second condensate and the water vapors generated in the low temperature generator, said condenser being adapted to further condense the condensate and the water vapors by means of cooling water, to provide a further condensed condensate, and to generate heated water having temperature in the range 30 - 40 °C;

- said evaporator housed together with said absorber is in operative communication with said condenser to receive the further condensed condensate, said evaporator being adapted to evaporate the further condensed condensate by extracting heat from cold water circulated there through, to provide chilled water having temperature in the range of 0 - 10 °C and to generate water vapors; and

- said absorber housed together with said evaporator is in operative communication with said low temperature generator to receive the still further concentrated Li-Br solution and said condenser to receive the heated water, said absorber being adapted to absorb the vapors generated in said evaporator in the still further concentrated Li-Br solution to provide the dilute Li-Br solution, thereby completing the refrigeration cycle, wherein, heat of dilution generated during the absorption process is absorbed by the heated water circulated there through to provide further heated water having temperature in the range of 35 - 45 °C.

Typically, in accordance with the present invention, said system comprises a low temperature heat exchanger, a medium temperature heat exchanger, a high temperature heat exchanger, a low temperature drain heat exchanger and a high temperature drain heat exchanger, being adapted to heat the dilute Li-Br solution leaving the absorber, to a temperature in the range of 150 - 180 °C, prior to being concentrated in said high temperature generator.

Alternatively, in accordance with the present invention, said system further comprises a heat reclaimer for heating the dilute Li-Br solution leaving the absorber by extracting left-over heat from said heat input.

Preferably, in accordance with the present invention, said low temperature heat exchanger, said medium temperature heat exchanger, and said high temperature heat exchanger are operatively connected in a consecutive manner.

Typically, in accordance with the present invention, said low temperature drain heat exchanger and said high temperature drain heat exchanger are operatively connected in a consecutive manner and in series with said high temperature heat exchanger.

Preferably, in accordance with the present invention, said low temperature drain heat exchanger and said high temperature drain heat exchanger are connected in parallel to said low temperature heat exchanger and said medium temperature heat exchanger.

Alternatively, in accordance with the present invention, said low temperature drain heat exchanger, said high temperature drain heat exchanger and said heat reclaimer are operatively connected in a consecutive manner and in parallel with said low temperature heat exchanger, said medium temperature heat exchanger and said high temperature heat exchanger.

Typically, in accordance with the present invention, said low temperature heat exchanger is operatively positioned between said low temperature generator and said absorber, said low temperature heat exchanger being adapted to extract heat from the still further concentrated Li-Br solution.

Preferably, in accordance with the present invention, said medium temperature heat exchanger is operatively positioned between said medium temperature generator and said low temperature generator, said medium temperature heat exchanger being adapted to extract heat from the further concentrated Li-Br solution.

Typically, in accordance with the present invention, said high temperature heat exchanger is operatively positioned between said high temperature generator and said medium temperature generator, said high temperature heat exchanger being adapted to extract heat from the concentrated Li-Br solution.

Preferably, in accordance with the present invention, said low temperature drain heat exchanger is operatively positioned between said low temperature generator and said condenser, said low temperature drain heat exchanger being adapted to extract heat from the second condensate.

Typically, in accordance with the present invention, said high temperature drain heat exchanger is operatively positioned between said medium temperature generator and said condenser, said high temperature drain heat exchanger being adapted to extract heat from the first condensate.

In accordance with the present invention, is disclosed a method for operating a triple-effect vapor absorption refrigeration system to generate refrigeration effect, said method comprising the steps of:

- vaporizing a dilute Li-Br solution having concentration in the range of 53 - 58 % in a high temperature generator by using a heat source having temperature in the range of 200 - 250 °C to obtain a concentrated Li-Br solution having concentration in the range of 55 - 60 % and water vapors having temperature in the range of 130 - 150 °C;

- vaporizing the concentrated Li-Br solution in a medium temperature generator by using the water vapors having temperature in the range of 130 - 150 °C to obtain a further concentrated Li-Br solution having concentration in the range of 57 - 62 % and water vapors having temperature in the range of 80 - 100 °C, and thereby generate a first condensate;

- vaporizing the further concentrated Li-Br solution in a low temperature generator by using the water vapors having temperature in the range of 80 - 100 °C to obtain a still further concentrated Li-Br solution having concentration in the range of 59 - 64 % and water vapors, and thereby generate a second condensate;

- condensing the first condensate, the second condensate, and the water vapors generated in the low temperature generator in a condenser by using cooling water having temperature in the range of 25 - 35 °C to obtain a further condensed condensate having high pressure, and to generate heated water having temperature in the range of 30 - 40 °C;

- evaporating the further condensed condensate in an evaporator by extracting heat from cold water circulated there through to generate water vapors and provide chilled water having temperature in the range of 0 - 10 °C; and

- absorbing the vapors in the still further concentrated Li-Br solution in an absorber to obtain the dilute Li-Br solution, wherein, heat of dilution generated during the absorption process is absorbed by the heated water to form further heated water having temperature in the range of 35 - 45 °C.

Typically, in accordance with the present invention, said method for operating a triple-effect vapor absorption refrigeration system includes the step of bifurcating the dilute Li-Br solution from the absorber, wherein a first portion is received in a low temperature heat exchanger and a second portion is received in a low temperature drain heat exchanger.

Preferably, in accordance with the present invention, said method for operating a triple-effect vapor absorption refrigeration system includes the step of heating the first portion of the dilute Li-Br solution in a low temperature heat exchanger by extracting heat from the still further concentrated Li-Br solution to obtain a first portion of heated dilute Li-Br solution having temperature in the range of 65 - 75 °C.

Typically, in accordance with the present invention, said method for operating a triple-effect vapor absorption refrigeration system includes the step of further heating the first portion of the heated dilute Li-Br solution in a medium temperature heat exchanger by extracting heat from the further concentrated Li-Br solution to obtain a first portion of further heated dilute Li-Br solution having temperature in the range of 120 - 130 °C.

Preferably, in accordance with the present invention, said method for operating a triple-effect vapor absorption refrigeration system includes the step of heating the second portion of the dilute Li-Br solution in a low temperature drain heat exchanger by extracting heat from the second condensate to obtain a second portion of heated dilute Li-Br solution having temperature in the range of 65 - 75 °C.

Typically, in accordance with the present invention, said method for operating a triple-effect vapor absorption refrigeration system includes the step of further heating the second portion of the heated dilute Li-Br solution in a high temperature drain heat exchanger by extracting heat from the first condensate to obtain a second portion of further heated dilute Li-Br solution having temperature in the range of 120 - 130 °C.

Preferably, in accordance with the present invention, said method for operating a triple-effect vapor absorption refrigeration system includes the step of combining the first portion of the further heated dilute Li-Br solution and the second portion of the further heated dilute Li-Br solution to obtain a combined stream of the further heated dilute Li-Br solution having temperature in the range of 120 - 130 °C.

Typically, in accordance with the present invention, said method for operating a triple-effect vapor absorption refrigeration system includes the step of still further heating the combined stream of the further heated dilute Li-Br solution in a high temperature heat exchanger by extracting heat from the concentrated Li-Br solution to obtain a still further heated dilute Li-Br solution having temperature in the range of 170 - 190 °C.

Alternatively, in accordance with the present invention, said method comprises still further heating the first portion of further heated dilute Li-Br solution in a high temperature heat exchanger by extracting heat from the concentrated Li-Br solution to obtain a first portion of still further heated dilute Li-Br solution having temperature in the range of 170 - 190 °C.

Alternatively, in accordance with the present invention, said method comprises still further heating the second portion of further heated dilute Li-Br solution in a heat reclaimer by extracting left-over heat from the heat input to obtain a second portion of still further heated dilute Li-Br solution having temperature in the range of 170 - 190 °C.

Alternatively, in accordance with the present invention, said method comprises combining the first portion of still further heated dilute Li-Br solution and second portion of still further heated dilute Li-Br solution.

Preferably, in accordance with the present invention, said method for operating a triple-effect vapor absorption refrigeration system includes the step of vaporizing the still further heated dilute Li-Br solution in the high temperature generator.

Typically, in accordance with the present invention, in said method for operating a triple effect vapor absorption refrigeration system the maximum Li-Br solution temperature and maximum Li-Br solution concentration does not occur simultaneously, hence, Li-Br corrosion rate is reduced and minimum non-condensable gases are generated, this helps in maintaining vacuum during operation thus providing a smoother operation.

In accordance with the present invention, said method for operating a triple effect vapor absorption refrigeration system includes the step of allowing the Li-Br solution to flow in series from the high temperature generator via the medium temperature generator to the low temperature generator, by gravity, by using a single solution pump between the absorber and the high temperature generator.

Preferably, in accordance with the present invention, said method for operating a triple effect vapor absorption refrigeration system includes the step of allowing the concentrated Li-Br solution to flow by gravity, wherein, only the flow of the dilute Li-Br solution from the absorber to the high temperature generator is controlled.

Typically, in accordance with the present invention, said method for operating a triple effect vapor absorption refrigeration system includes the step of feeding the cooling water primarily at the condenser so as to lower the overall operating pressure, temperature and effect an increase in the COP.

### BRIEF DESCRIPTION OF THE ACCOMPANYING DRAWINGS

The invention will now be described with the help of the accompanying drawings, in which,

FIGURE 1 illustrates a schematic of an embodiment of a conventional triple-effect vapor absorption refrigeration system;

FIGURE 2 illustrates a schematic of another embodiment of a conventional triple-effect vapor absorption refrigeration system;

FIGURE 3 illustrates a schematic of a preferred embodiment of the triple-effect vapor absorption refrigeration system in accordance with the present invention; and

FIGURE 4 illustrates a schematic of another preferred embodiment of the triple-effect vapor absorption refrigeration system in accordance with the present invention.

### DETAILED DESCRIPTION OF THE ACCOMPANYING DRAWINGS

The invention will now be described with reference to the accompanying drawings which do not limit the scope and ambit of the invention. The description provided is purely by way of example and illustration.

The present invention envisages a triple-effect vapor absorption refrigeration system which minimizes the corrosion problems due to high Li-Br concentrations and high temperature and also combats problems of Li-Br crystallization by continuously monitoring the working parameters during operation of the refrigeration cycle. Further, the system provides a COP of greater than 1.7 by minimizing heat losses and conserves energy by reducing the pumping costs.

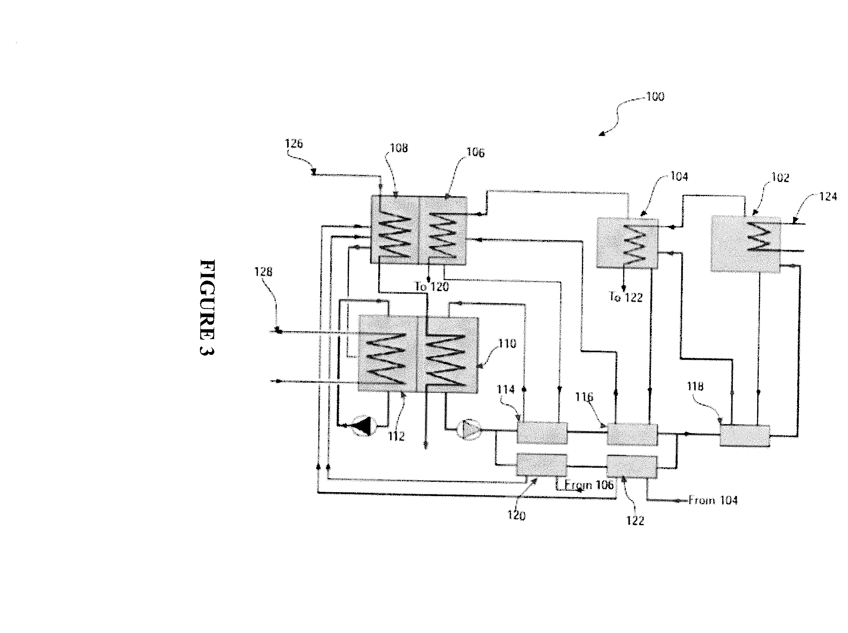

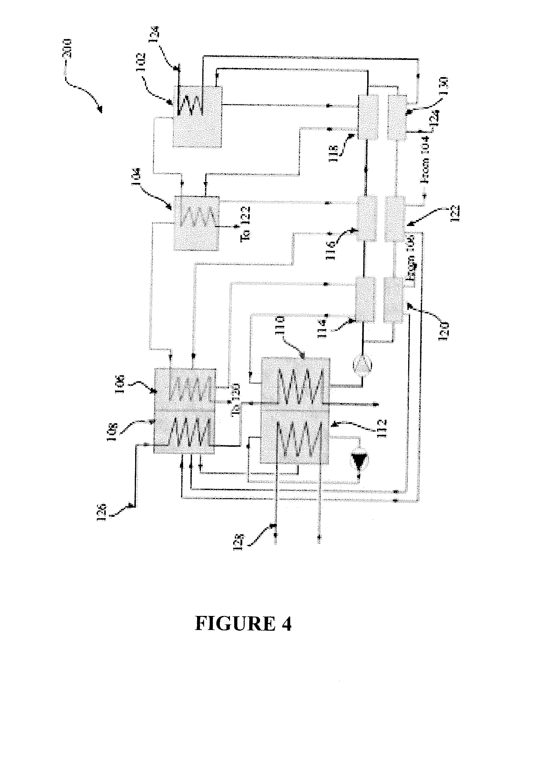

The preferred embodiments of the triple-effect vapor absorption refrigeration system of the present invention are illustrated in FIGURES 3 & 4, generally referenced by numerals 100 & 200, respectively. The systems (100, 200) comprise: a high temperature generator 102, a medium temperature generator 104, a low temperature generator 106, a condenser 108, an evaporator 112, an absorber 110, a low temperature heat exchanger 114, a medium temperature heat exchanger 116, a high temperature heat exchanger 118, a low temperature drain heat exchanger 120, a high temperature drain heat exchanger 122, and a heat reclaimer 130.

The preferred embodiment 100 illustrates a refrigeration cycle under conditions when superheated water is used as the heat input and the preferred embodiment 200 illustrates a refrigeration cycle under conditions when the heat input is obtained from superheated steam or direct fuel firing (high temperature heat input). The refrigerant-absorbent pair is typically water-lithium bromide (LiBr).

FIGURE 3 & 4 disclose the refrigeration cycle in accordance with the present invention. A dilute Li-Br solution, exiting the absorber 110, having concentration in the range of 53 - 58 %, is primarily received in the high temperature generator 102; wherein the high temperature generator 102 and the absorber 110 are operatively connected. The high temperature generator 102 is adapted to receive a heat input 124 having temperature in the range of 200 - 250 °C; the heat input 124 boils the dilute Li-Br solution to provide a concentrated Li-Br solution having concentration in the range of 55 - 60 % and generate water vapors having temperature in the range of 130 - 150 °C. The heat input 124 is selected from steam, superheated water, combustion gases from combustion of a fuel or exhaust gases. When the heat input 124 is superheated steam or combustion gases from combustion of a fuel or exhaust gases, the heat reclaimer 130 is provided for extracting left-over heat from the heat input leaving the high temperature generator 102. The dilute Li-Br solution is heated in the heat exchangers, viz., 114, 116, 118, 120, & 122 prior to concentration in the high temperature generator 102. The dilute Li-Br solution can be further heated in the heat exclaimer 130 (refer FIGURE 4) by heat from the heat input 124.

The medium temperature generator 104 and the high temperature generator 102 are operatively connected to convey the concentrated Li-Br solution and the water vapors having temperature in the range of 130 - 150 °C from the high temperature generator 102 to the medium temperature generator 104. The concentrated Li-Br solution is first passed through the high temperature heat exchanger 118 where it losses heat to the dilute Li-Br solution. The water vapors from the high temperature generator 102 act as a heat source for vaporizing the concentrated Li-Br solution in the medium temperature generator 104. The water vapors further concentrate the concentrated Li-Br solution, thus providing a further concentrated Li-Br solution having concentration in the range of 57 - 62 % and thereby consequently generating water vapors having temperature in the range of 80 - 100°C. In the process, the water vapors passed through the generator tubes as the heat source condense to produce a first condensate. The first condensate is passed through the high temperature drain heat exchanger 122 where it losses heat to the dilute Li-Br solution.

The low temperature generator 106 is operatively connected to the medium temperature generator 104 to receive the further concentrated Li-Br solution and the water vapors having temperature in the range of 80 - 100 °C. Prior to vaporization in the low temperature generator 106 the further concentrated Li-Br solution is passed through the medium temperature heat exchanger 116 so as to extract heat therefrom to the dilute Li-Br solution. The water vapors generated in the medium temperature generator 104 due to vaporization of the Li-Br solution act as a heat source in the low temperature generator 106 for concentrating the further concentrated Li-Br solution, thereby providing a still further concentrated Li-Br solution having concentration in the range of 59 - 64 %. The still further concentrated Li-Br solution, thus obtained in the low temperature generator 106 is the most concentrated absorbent solution achieved using the process cycle of the present invention. The water vapors passed through the tubes of the low temperature generator 106, after rejecting heat, get condensed to produce a second condensate which is passed through the low temperature drain heat exchanger 120 for further cooling. Finally, the still further concentrated Li-Br solution, leaving the low temperature generator 106, is sprayed in the absorber 110 after passing through the low temperature heat exchanger 114 where the solution loses heat to the dilute Li-Br solution.

The second condensate after passing through the low temperature drain heat exchanger 120, the first condensate after passing through the high temperature drain heat exchanger 122, and water vapors having temperature generated in the low temperature generator 106 are fed to the condenser 108, where the condensate is further condensed and the vapors are condensed, by means of cooling water having temperature in the range of 25 - 35 °C circulated there through via supply line 126, to provide a further condensed condensate and generate heated water having temperature in the range of 30 - 40 °C. The step of primary condensing the vapors before passing through the condenser 108 helps in reducing the condenser duty. The further condensed condensate leaves at a high pressure from the condenser 108, are sprayed in the evaporator 112.

As seen in the FIGURES 3 & 4, the evaporator 112 and the absorber 110 are housed together in a single shell. By maintaining low-pressure in this shell, the further condensed high pressure condensate, sprayed in the evaporator 112, is vaporized at a low temperature by extracting heat from cold water circulated through the evaporator 112 tubes via supply line 128; thus chilling the water to a temperature between 0 - 10 °C. The vapors thus produced in the evaporator 112 are absorbed by the still further concentrated Li-Br solution sprayed in the absorber 110. The still further concentrated Li-Br solution, after absorbing the refrigerant vapors, becomes dilute and leaves the absorber 110 as the dilute Li-Br solution. The process of vapor absorption produces heat of dilution which is rejected to the heated water circulated there through from the condenser 108 via supply line 126, thereby producing further heated water having temperature in the range of 35 - 45 °C. The refrigerant stream leaving the evaporator 112 is sprayed back on to the evaporator 112 tubes via pumping means.

The dilute Li-Br solution leaving the absorber 110 is passed via pumping means through the series of heat exchangers 114, 116, 118, 120, and 122, and the heat reclaimer 130. The dilute Li-Br solution is bifurcated, wherein a first portion is received in the low temperature heat exchanger 114 and a second portion is received in the low temperature drain heat exchanger 120. The low temperature heat exchanger 114, the medium temperature heat exchanger 116, and the high temperature heat exchanger 118 are operatively connected in a consecutive manner. In the embodiment 200 (FIGURE 4), the low temperature drain heat exchanger 120, the high temperature drain heat exchanger 122, and the heat reclaimer 130 are operatively connected in a consecutive manner and in parallel with the low temperature heat exchanger 114, the medium temperature heat exchanger 116 and the high temperature heat exchanger 118. In the embodiment 100, the low temperature heat exchanger 114 and the medium temperature heat exchanger 116 are arranged parallel to the low temperature drain heat exchanger 120 and the high temperature drain heat exchanger 122.

In the preferred embodiment 100, the first portion of the dilute Li-Br solution extracts heat from the still further concentrated Li-Br solution in the low temperature heat exchanger 114 to become a first portion of heated dilute Li-Br solution. The first portion of the heated dilute Li-Br solution extracts heat from the further concentrated Li-Br solution in the medium temperature heat exchanger 116 to become a first portion of further heated dilute Li-Br solution. The second portion of the dilute Li-Br solution extracts heat from the second condensate in the low temperature drain heat exchanger 120 to become a second portion of heated dilute Li-Br solution. The second portion of the heated dilute Li-Br solution extracts heat from the first condensate in the high temperature drain heat exchanger 122 to become a second portion of further heated dilute Li-Br solution. The first portion of the further heated dilute Li-Br solution and the second portion of the further heated dilute Li-Br solution are combined and passed through the high temperature heat exchanger 118, where the solution extracts heat from the concentrated Li-Br solution to become a still further heated dilute Li-Br solution. The still further heated dilute Li-Br solution is conveyed to the high temperature generator 102 for vaporizing. The system 100 is provided with a programmable logic control (PLC) (not shown in the figure) to provide an automated control over the refrigeration cycle.

In the preferred embodiment 200, the first portion of the dilute Li-Br solution extracts heat from the still further concentrated Li-Br solution in the low temperature heat exchanger 114 to become a first portion of heated dilute Li-Br solution. The first portion of the heated dilute Li-Br solution extracts heat from the further concentrated Li-Br solution in the medium temperature heat exchanger 116 to become a first portion of further heated dilute Li-Br solution. The first portion of the further heated dilute Li-Br solution is passed through the high temperature heat exchanger 118 where the solution extracts heat from the concentrated Li-Br solution to become a first portion of still further heated dilute Li-Br solution. The second portion of the dilute Li-Br solution extracts heat from the second condensate in the low temperature drain heat exchanger 120 to become a second portion of heated dilute Li-Br solution. The second portion of the heated dilute Li-Br solution extracts heat from the first condensate in the high temperature drain heat exchanger 122 to become a second portion of further heated dilute Li-Br solution. The second portion of further heated dilute Li-Br solution is still further heated in the heat reclaimer 130 by extracting left-over heat from the high temperature heat input 124 (steam condensate or exhaust/flue gases) leaving the high temperature generator 102, to obtain a second portion of still further heated dilute Li-Br solution. The heat input 124 is suitably cooled before it is let off. The first and second portion of still further heated dilute Li-Br solution are combined and conveyed to the high temperature generator 102 for vaporizing. The system 200 is provided with a programmable logic control (PLC) (not shown in the figure) to provide an automated control over the refrigeration cycle.

### TECHNICAL ADVANTAGES

A triple-effect vapor absorption refrigeration system and method thereof; as disclosed in the present invention has several technical advantages including but not limited to the realization of:

• maximum Li-Br solution temperature and maximum Li-Br solution concentration does not occur simultaneously, hence, Li-Br corrosion rate is reduced and minimum non-condensable gases are generated, this helps in maintaining vacuum during operation thus providing a smoother operation;

• as the Li-Br solution flows in series from the high temperature generator 102 via the medium temperature generator 104 to the low temperature generator 106, by gravity, only one solution pump is required for pumping from the absorber 110 to the high temperature generator 102; this reduces the overall cost of operation;

• since the concentrated Li-Br solution flows by gravity, only the flow of the dilute Li-Br solution to the high temperature generator 102 needs to be controlled, thus the system is easy-to-operate in comparison to the conventional systems;

• since the cooling water is first fed at the condenser 108, this lowers the overall operating pressure and at the same time enhances the COP due to the low condensing temperatures;

• the system has an in-built programmable logic control for automated operation which detects the probability of Li-Br crystallization and take preventive measures to avoid the same; and

• since the system operates at a higher COP as compared to double-effect systems, the system helps in reducing the external heat input requirement therefore reducing the CO2 emissions and the operating costs.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the invention to achieve one or more of the desired objects or results.

Any discussion of documents, acts, materials, devices, articles or the like that has been included in this specification is solely for the purpose of providing a context for the invention. It is not to be taken as an admission that any or all of these matters form part of the prior art base or were common general knowledge in the field relevant to the invention as it existed anywhere before the priority date of this application.

The numerical values mentioned for the various physical parameters, dimensions or quantities are only approximations and it is envisaged that the values higher/lower than the numerical values assigned to the parameters, dimensions or quantities fall within the scope of the invention, unless there is a statement in the specification specific to the contrary.

In view of the wide variety of embodiments to which the principles of the present invention can be applied, it should be understood that the illustrated embodiments are exemplary only. While considerable emphasis has been placed herein on the particular features of this invention, it will be appreciated that various modifications can be made, and that many changes can be made in the preferred embodiments without departing from the principle of the invention. These and other modifications in the nature of the invention or the preferred embodiments will be apparent to those skilled in the art from the invention herein, whereby it is to be distinctly understood that the foregoing descriptive matter is to be interpreted merely as illustrative of the invention and not as a limitation.

## Claims

1. A triple-effect vapor absorption refrigeration system (100, 200) comprising: a high temperature generator (102), a medium temperature generator (104), a low temperature generator (106), a condenser (108), an absorber (110), and an evaporator (112);
**characterized in that**:
- said high temperature generator (102) is in operative communication with said absorber (110) to receive a dilute Li-Br solution, said high temperature generator (102) being adapted to concentrate the dilute Li-Br solution by means of a heat source (124) having temperature in the range of 200 - 250 °C to provide a concentrated Li-Br solution and generate water vapors having temperature in the range of 130 - 150 °C;
- said medium temperature generator (104) is in operative communication with said high temperature generator (102) to receive the concentrated Li-Br solution and the water vapors having temperature in the range of 130 - 150 °C, said medium temperature generator (104) being adapted to further concentrate the concentrated Li-Br solution by means of the water vapors to provide a further concentrated Li-Br solution and generate water vapors having temperature in the range of 80 - 100 °C and a first condensate;
- said low temperature generator (106) is in operative communication with said medium temperature generator (104) to receive the further concentrated Li-Br solution and the water vapors having temperature in the range of 80 - 100 °C, said low temperature generator (106) being adapted to still further concentrate the further concentrated Li-Br solution by means of the water vapors to provide a still further concentrated Li-Br solution and generate water vapors and a second condensate;
- said condenser (108) is in operative communication with said medium temperature generator (104) to receive the first condensate and said low temperature generator (106) to receive the second condensate and the water vapors generated in the low temperature generator (106), said condenser (108) being adapted to further condense the condensate and the water vapors by means of cooling water, to provide a further condensed condensate, and to generate heated water having temperature in the range 30 - 40 °C;
- said evaporator (112) housed together with said absorber (110) is in operative communication with said condenser (108) to receive the further condensed condensate, said evaporator (112) being adapted to evaporate the further condensed condensate by extracting heat from cold water circulated there through, to provide chilled water having temperature in the range of 0 - 10 °C and to generate water vapors;
- said absorber (110) housed together with said evaporator (112) is in operative communication with said low temperature generator (106) to receive the still further concentrated Li-Br solution and said condenser (108) to receive the heated water, said absorber being adapted to absorb the vapors generated in said evaporator (112) in the still further concentrated Li-Br solution to provide the dilute Li-Br solution, thereby completing the refrigeration cycle, wherein, heat of dilution generated during the absorption process is absorbed by the heated water circulated there through to provide further heated water having temperature in the range of 35 - 45 °C; and said system (100,200) further comprises a low temperature heat exchanger (114), a medium temperature heat exchanger (116), a high temperature heat exchanger (118), a low temperature drain heat exchanger (120) and a high temperature drain heat exchanger (122), being adapted to heat the dilute Li-Br solution leaving the absorber (110), to a temperature in the range of 150 - 180 °C, prior to being concentrated in said high temperature generator (102) and optionally a heat reclaimer (130) for heating the dilute Li-Br solution leaving the absorber (110) by extracting left-over heat from said heat input (124).

2. The triple-effect vapor absorption system (100, 200) as claimed in claim 1, wherein said low temperature heat exchanger (114), said medium temperature heat exchanger (116), and said high temperature heat exchanger (118) and said low temperature drain heat exchanger (120) and said high temperature drain heat exchanger (122) are operatively connected in a consecutive manner ; or said low temperature drain heat exchanger (120) and said high temperature drain heat exchanger (122) are connected in parallel to said low temperature heat exchanger (114) and said medium temperature heat exchanger (116); or said low temperature drain heat exchanger (120), said high temperature drain heat exchanger (122) and said heat reclaimer (130) are operatively connected in a consecutive manner and in parallel with said low temperature heat exchanger (114), said medium temperature heat exchanger (116) and said high temperature heat exchanger (118); or said high temperature heat exchanger (118) is operatively positioned between said high temperature generator (102) and said medium temperature generator (104), said high temperature heat exchanger (118) being adapted to extract heat from the concentrated Li-Br solution; or said low temperature drain heat exchanger (120) is operatively positioned between said low temperature generator (106) and said condenser (108), said low temperature drain heat exchanger (120) being adapted to extract heat from the second condensate or said high temperature drain heat exchanger (122) is operatively positioned between said medium temperature generator (104) and said condenser (108), said high temperature drain heat exchanger (122) being adapted to extract heat from the first condensate.

3. A method for operating a triple-effect vapor absorption refrigeration system to generate refrigeration effect, said method comprising the following steps:
- vaporizing a dilute Li-Br solution having concentration in the range of 53 - 58 % in a high temperature generator by using a heat source having temperature in the range of 200 - 250 °C to obtain a concentrated Li-Br solution having concentration in the range of 55 - 60 % and water vapors having temperature in the range of 130 - 150 °C;
- vaporizing the concentrated Li-Br solution in a medium temperature generator by using the water vapors having temperature in the range of 130 - 150 °C to obtain a further concentrated Li-Br solution having concentration in the range of 57 - 62 % and water vapors having temperature in the range of 80 - 100 °C, and thereby generate a first condensate;
- vaporizing the further concentrated Li-Br solution in a low temperature generator by using the water vapors having temperature in the range of 80 - 100 °C to obtain a still further concentrated Li-Br solution having concentration in the range of 59- 64 % and water vapors, and thereby generate a second condensate;
- condensing the first condensate, the second condensate, and the water vapors generated in the low temperature generator in a condenser by using cooling water having temperature in the range of 25 - 35 °C to obtain a further condensed condensate having high pressure, and to generate heated water having temperature in the range of 30 - 40 °C;
- evaporating the further condensed condensate in an evaporator by extracting heat from cold water circulated there through to generate water vapors and provide chilled water having temperature in the range of 0 - 10 °C; and
- absorbing the vapors in the still further concentrated Li-Br solution in an absorber to obtain the dilute Li-Br solution, wherein, heat of dilution generated during the absorption process is absorbed by the heated water to form further heated water having temperature in the range of 35 - 45 °C.

4. A method for operating a triple-effect vapor absorption refrigeration system to generate refrigeration effect, said method comprising the following steps:
- vaporizing a dilute Li-Br solution having concentration in the range of 53 - 58 % in a high temperature generator by using a heat source having temperature in the range of 200 - 250 °C to obtain a concentrated Li-Br solution having concentration in the range of 55 - 60 % and water vapors having temperature in the range of 130 - 150 °C;
- vaporizing the concentrated Li-Br solution in a medium temperature generator by using the water vapors having temperature in the range of 130 - 150 °C to obtain a further concentrated Li-Br solution having concentration in the range of 57 - 62 % and water vapors having temperature in the range of 80 - 100 °C, and thereby generate a first condensate;
- vaporizing the further concentrated Li-Br solution in a low temperature generator by using the water vapors having temperature in the range of 80 - 100 °C to obtain a still further concentrated Li-Br solution having concentration in the range of 59- 64 % and water vapors, and thereby generate a second condensate;
- condensing the first condensate, the second condensate, and the water vapors generated in the low temperature generator in a condenser by using cooling water having temperature in the range of 25 - 35 °C to obtain a further condensed condensate having high pressure, and to generate heated water having temperature in the range of 30 - 40 °C;
- evaporating the further condensed condensate in an evaporator by extracting heat from cold water circulated there through to generate water vapors and provide chilled water having temperature in the range of 0 - 10 °C;
- absorbing the vapors in the still further concentrated Li-Br solution in an absorber to obtain the dilute Li-Br solution, wherein, heat of dilution generated during the absorption process is absorbed by the heated water to form further heated water having temperature in the range of 35 - 45 °C; and
- bifurcating the dilute Li-Br solution leaving the absorber, wherein a first portion is received in a low temperature heat exchanger and a second portion is received in a low temperature drain heat exchanger and further comprises heating the first portion of the dilute Li-Br solution in a low temperature heat exchanger by extracting heat from the still further concentrated Li-Br solution to obtain a first portion of heated dilute Li-Br solution having temperature in the range of 65 - 75 °C.

5. The method as claimed in claim 4, which comprises further heating the first portion of the heated dilute Li-Br solution in a medium temperature heat exchanger by extracting heat from the further concentrated Li-Br solution to obtain a first portion of further heated dilute Li-Br solution having temperature in the range of 120 - 130 °C.

6. The method as claimed in claim 4, which comprises heating the second portion of the dilute Li-Br solution in a low temperature drain heat exchanger by extracting heat from the second condensate to obtain a second portion of heated dilute Li-Br solution having temperature in the range of 65 - 75 °C.

7. The method as claimed in claim 4, which comprises further heating the second portion of the heated dilute Li-Br solution in a high temperature drain heat exchanger by extracting heat from the first condensate to obtain a second portion of further heated dilute Li-Br solution having temperature in the range of 120 - 130 °C.

8. The method as claimed in claim 4, which comprises combining the first portion of the further heated dilute Li-Br solution and the second portion of the further heated dilute Li-Br solution to obtain a combined stream of the further heated dilute Li-Br solution having temperature in the range of 120 - 130 °C and optionally which comprises still further heating the combined stream of the further heated dilute Li-Br solution in a high temperature heat exchanger by extracting heat from the concentrated Li-Br solution to obtain a still further heated dilute Li-Br solution having temperature in the range of 170 - 190 °C.

9. The method as claimed in claim 4, which comprises still further heating the first portion of further heated dilute Li-Br solution in a high temperature heat exchanger by extracting heat from the concentrated Li-Br solution to obtain a first portion of still further heated dilute Li-Br solution having temperature in the range of 170 - 190 °C.

10. The method as claimed in claim 4, which comprises still further heating the second portion of further heated dilute Li-Br solution in a heat reclaimer by extracting left-over heat from the heat input to obtain a second portion of still further heated dilute Li-Br solution having temperature in the range of 170 - 190 °C.

11. The method as claimed in claim 4, which comprises combining the first portion of still further heated dilute Li-Br solution and second portion of still further heated dilute Li-Br solution.

12. The method as claimed in claim 4, which comprises vaporizing the still further heated dilute Li-Br solution in the high temperature generator.

13. The method as claimed in claim 4, which includes the step of maintaining vacuum during the operation of the triple-effect vapor absorption refrigeration system to generate refrigeration effect in a manner that the maximum Li-Br solution temperature and maximum Li-Br solution concentration do not occur simultaneously, thereby reducing the Li-Br corrosion rate and generating minimum non-condensable gases.

14. The method as claimed in claim 4, which includes the step of allowing the Li-Br solution to flow in series from the high temperature generator via the medium temperature generator to the low temperature generator, by gravity, by using a single solution pump between the absorber and the high temperature generator or allows the concentrated Li-Br solution to flow by gravity, wherein, only the flow of the dilute Li-Br solution from the absorber to the high temperature generator is controlled and which includes the step of feeding the cooling water primarily at the condenser so as to lower the overall operating pressure, temperature and effect an increase in the COP.
